# EUROPÄISCHE PATENTSCHRIFT

(11) **EP 1 805 270 B1**
(45) Veröffentlichungstag und Bekanntmachung des Hinweises auf die Patenterteilung: **10.12.2008**
(21) Anmeldenummer: 05789365.3
(22) Anmeldetag: 29.09.2005
(51) Int. Cl.: C09D 17/00, C09D 11/00, C09B 67/00, C08G 63/668, C08L 67/02

(54) **WASSERBASIERENDE PIGMENTPRÄPARATIONEN AUF OLIGOESTERBASIS, IHRE HERSTELLUNG UND VERWENDUNG**
AQUEOUS OLIGOESTER-BASED PIGMENT PREPARATIONS, THEIR PRODUCTION AND USE
PREPARATIONS DE PIGMENTS AQUEUSES A BASE D'OLIGOESTER, PROCEDE POUR LES PRODUIRE ET UTILISATION DE CELLES-CI

(30) Priorität: 22.10.2004 DE 102004051455
(43) Veröffentlichungstag der Anmeldung: 11.07.2007
(73) Patentinhaber: Clariant Produkte (Deutschland) GmbH, 65929 Frankfurt am Main (DE)
(72) Erfinder: FECHNER, Björn, 65817 Eppstein (DE); LANG, Frank-Peter, 65795 Hattersheim (DE); LERCH, Alexander, 63571 Gelnhausen (DE); BECHTOLD, Uwe, 60437 Frankfurt am Main (DE); AHRENS, Hendrik, 65931 Frankfurt am Main (DE)
(74) Vertreter: Hütter, Klaus
(86) Internationale Anmeldenummer: PCT/EP2005/010514
(87) Internationale Veröffentlichungsnummer: WO 2006/045396

(56) Entgegenhaltungen:
- EP-A- 0 803 554
- EP-A- 1 270 624
- DE-A1- 4 112 327

## Beschreibung

Gegenstand der vorliegenden Erfindung sind wasserbasierende Pigmentpräparationen bzw. -dispersionen auf Oligoesterbasis, Verfahren zu ihrer, Herstellung, ihre Verwendung zum Einfärben von natürlichen und synthetischen Materialien, insbesondere von wässrigen Anstrichmitteln; Dispersions- und Lackfarben aller Art.

Zum Einfärben in den oben genannten Anwendungen werden heute vielmals wässrige Pigmentpräparationen verwendet. Solche Präparationen werden beispielsweise in EP 0 735 109, WO 03/006 556 oder EP 1 049 745 beschrieben. Bei der Herstellung der Präparationen werden Dispergiermittel eingesetzt, die die Pigmentteilchen feinteilig in einem wässrigen Medium physikalisch stabilisieren. Gewöhnlicherweise kommen anionische, kationische, amphotere oder nichtionische Dispergiermittel mit Tensidcharakter, gegebenenfalls auch in makromolekularer Form, zum Einsatz. Zu den am häufigsten verwendeten Dispergiermitteln zählen Alkylaryl-Verbindungen, deren Oxalkylierungs- und Sulfonierungs- oder Phosphatierungsprodukte, ferner Dispergiermittel aus der Gruppe der Novolake oder oxalkylierten Fettsäurederivate, zudem polymere Dispergiermittel bestehend aus den Copolymeren von Styrol und Acryl- oder Methacrylsäure bzw. deren Estern. Weiterhin enthalten herkömmliche Pigmentpräparationen neben den Tensiden oder Dispergiermitteln in der Regel auch verschiedene Additive wie Netzmittel, Verdicker, Konservierungsmittel, Viskositätsstabilisatoren, Füllstoffe und Retentionsmittel. Die Retentionsmittel, oft auch Eintrocknungsverhinderer genannt, sorgen dafür, dass das Produkt nicht eintrocknet oder bereits vor der Verwendung antrocknet. Zu diesem Zweck werden häufig niedermolekulare, hygroskopische Verbindungen wie Glykole, Glycerine oder hochmolekulare, nichtflüchtige Polymere wie Polyetherpolyole (Polyglykole) benutzt.

Dispergiermittel und Additive zur Herstellung von Dispersionen mit hohem Pigmentgehalt müssen sorgfältig ausgewählt werden, damit notwendige Eigenschaften, die in folgende drei Hauptaspekte gegliedert werden können, erfüllt werden:
1) Zur Erzielung hoher Farbstärken und genau definierter Farbtöne bei niedriger Viskosität müssen die Pigmentteilchen in der Dispersion durch die Dispergiermittel und Additive sehr gut stabilisiert sein. Weder bei dem Dispergiervorgang noch bei der Lagerung sollten Flockungserscheinungen, Reagglomerationen oder Sedimentationen auftreten. Derartige Phänomene führten ansonsten zu Viskositätsänderungen der Präparation und nach Einarbeitung in das Anwendungsmedium zu Farbtonänderungen und Verlusten an Farbstärke, Deckvermögen, Glanz, Homogenität, Brillanz sowie zu schlecht reproduzierbaren Farbtönen, zu Ablaufneigungen bei den gefärbten Materialien und zu einem Rückgang der An- und Eintrockenbeständigkeit.
2) Die Pigmentpräparationen sollten möglichst mit einer breiten Anzahl von Anwendungsmedien verträglich sein, weswegen die Dispergiermittel und Additive mit solchen Systemen verträglich sein müssen. Sie sollten quasi "universalverträglich" sein. Wenn die Verträglichkeit nicht ausreicht, kommt es bei der Einbringung der Pigmentpräparation in das Anwendungsmedium zur Flockulation, Reagglomeration oder Stippenbildung. Teilweise werden diese Phänomene direkt durch eine einsetzende Phasenseparation beobachtet, teilweise lässt sich die Unverträglichkeit auch erst durch geeignete Tests, beispielsweise den "Rub-Out-Test", sichtbar machen. Bei dem "Rub-Out-Test" wird der Lack oder die Dispersionsfarbe nach Mischen mit der Pigmentdispersion auf eine Fläche, z. B. auf eine Lackkarte, aufgetragen. Anschließend kann mit einem Pinsel oder durch Nachreiben mit dem Finger das ausgeflockte Pigment zum Teil redispergiert werden. Die nachgeriebene Fläche ist dann kräftiger gefärbt als die angrenzende, nicht nachbehandelte Fläche. Der "Rub-Out-Test" ist eine einfache, aber gute Prüfmethode für die Beurteilung der Flockungsbeständigkeit von Pigmentdispersionen.
3) Die Pigmentpräparationen müssen ökotoxikologisch einwandfrei sein und mit Dispergiermitteln hergestellt werden, die biologisch abbaubar sind. Es sind zahlreiche wässrige Pigmentpräparationen bekannt, die den Aspekt 1) erfüllen, z.B. aus EP 0 542 052, EP 0 735 109, WO 03/006 556, EP 1 049 745, DE 101 35 140. Sie verfügen über hohe Farbstärken und definierte Farbtöne bei niedriger Viskosität, was eine gute Stabilisierung der Pigmentteilchen in der Dispersion voraussetzt. Bei dem Dispergiervorgang und auch bei der Lagerung treten Flockungserscheinungen, Reagglomerationen oder Sedimentationen nicht oder nur sehr geringfügig auf. Diese Pigmentdispersionen erfüllen aber den Aspekt 2) nicht, da sie nicht mit einer größeren Anzahl an verschiedenen Weißdispersionen verträglich sind. So sind sie in der Regel in zwei bis drei unterschiedliche Weißdispersionen mit guter Verträglichkeit einrührbar, bei weiteren unterschiedlichen Weißdispersionen existiert jedoch eine Unverträglichkeit, die in jedem Fall mittels "Rub-Out-Test" deutlich nachgewiesen werden kann. Häufig ist die Unverträglichkeit bei mindestens einer getesteten Weißdispersion auch durch eine Nichtmischbarkeit oder eine klar ausgeprägte, meist unmittelbar nach dem Einrühren der Pigmentpräparation in die Weißdispersion beginnende Phasenseparation beobachtbar. Die Unverträglichkeit dieser Pigmentdispersionen zu einer großen Anzahl unterschiedlicher Weißdispersionen bringt viele anwendungstechnische Nachteile mit sich.

Es besteht daher ein Bedarf an wässrigen Pigmentpräparationen, die die oben genannten Nachteile nicht aufweisen und die Aspekte 1) und 2) erfüllen und zudem mit biologisch abbaubaren Dispergiermitteln hergestellt werden können und folglich auch den Aspekt 3) erfüllen. Der vorliegenden Erfindung lag daher die Aufgabe zugrunde, wässrige Pigmentdispersionen bereitzustellen, die mit möglichst vielen Weißdispersionen und Lacken verträglich sind und demnach eine gewisse "Universalverträglichkeit" aufweisen. Hierbei soll in Weißdispersionen eine sehr gute Verträglichkeit insbesondere zu Silikon-, PU-, Alkyd- oder Acryldispersionsbindemitteln gegeben sein. Weder soll eine Unverträglichkeit durch eine sich ausbildende Phasenseparation noch durch Unterschiede in der Farbstärke beim "Rub-Out-Test" beobachtbar sein. Weiterhin sollen die wässrigen Pigmentdispersionen hohe Farbstärken und definierte Farbtöne bei niedriger Viskosität aufweisen. Bei dem Dispergiervorgang; bei der Lagerung und bei der . Einarbeitung in die Weißdispersion sollen keine Flockungserscheinungen, Reagglomerationen oder Sedimentationen auftreten. Weiterhin sollen die Pigmentpräparationen über eine gute An- und Eintrockenbeständigkeit und eine gute Scheuer- und Abriebfestigkeit verfügen. Überaschenderweise wurde gefunden, dass sich bestimmte wasserlösliche oder wasserdispergierbare nichtionische Oligo- bzw. Polyester als Dispergiermittel für Pigmente eignen, eine hohe Verträglichkeit zu vielen Weißdispersionen und Lacken aufweisen und daher die vorstehend genannte Aufgabe lösen. Sie sind ökotoxikologisch unbedenklich und biologisch abbaubar.

Bislang wurden solche nichtionischen Oligo- oder Polyester nicht als Dispergiermittel für wässrige Pigmentpräparationen verwendet.
US 5 973 026 beschreibt als Polyester das ionische Copoly(1,2-propylendiethylen)terephthalat-copoly(Natrium-sulfoisophthalat)-dicarboxylat, das zur Herstellung von Ink Jet Inks verwendet wird. Dieses Polymer verfügt jedoch nicht über Polyalkylenglykol- und Methylpolyalkylenglykol-Struktureinheiten im Polyester, die in der hier vorliegenden Erfindung beschrieben werden und essentiell für die sterische Stabilisierung in der Dispersion sind, damit diese flockungsbeständig und verträglich zu vielen Anwendungsmedien ist.

In JP 2003096170 werden ionische Polyester aufgezeigt, die aus 5-Methylsulfoisophthalat-Natriumsalz und Bis(1-hydroxyethyl)hexahydroterephthalat gebildet werden und sich als Dispergiermittel zur Herstellung von Tonern eignen. Diese Polymere verfügen ebenfalls nicht über Polyalkylenglykol- und Methylpolyalkylenglykol-Struktureinheiten im Polyester.

In JP 1-141968 werden aromatisch-aliphatische Polyester als Dispergiermittel offenbart. Diese Polymere verfügen nur über Esterbindungen zwischen den Struktureinheiten und nicht über Polyalkylenglykol- und Methylpolyalkylenglykol-Struktureinheiten im Molekül. Nachteil solcher aliphatischer Esterbindungen ist, dass sie in wässriger Lösung einer hydrolytischen.Spaltung ausgesetzt sind, daher nur eine kurze Lebensdauer haben und die Lagerstabilität einer Pigmentpräparation deutlich verkürzen.

Die in der vorliegenden Erfindung verwendeten nichtionischen Oligo- oder Polyester sind bisher nur in der Textilchemie bei der textilen Ausrüstung (Finishing) zur Hydrophilisierung, zur Verbesserung des Feuchtigkeitstransports, zur Verbesserung der Auswaschbarkeit von hydrophoben Anschmutzungen, wie z.B. Fetten und Ölen, und zur Verbesserung der Antistatik von Polyestergeweben eingesetzt worden. Bekannt ist auch deren Verwendung als so genannte Soil Release Polymere in Wasch- und Reinigungsmitteln für Textilien. Auch hier dienen sie zur Verbesserung der Schmutzablösung von Synthesefasern, insbesondere von Polyester und Polyestermischgeweben. Beispiele für wasserlösliche oder wasserdispergierbare Oligo- bzw. Polyester werden in den folgenden Schriften beschrieben: US 3,712,873, US 3,959,230, EP 0 442 101, DE 44 03 866, EP 253 567, EP 357 280, DE 195 22 431, EP 0 964 015 und US 6,153,723.

Die wasserlöslichen oder wasserdispergierbaren Oligo- oder Polyester sind Polykondensate auf der Basis von aromatischen Dicarbonsäuren und Glykolkomponenten, welche über zwei oder mehr Hydroxylgruppen verfügen.

Gegenstand der vorliegenden Erfindung sind wässrige Pigmentpräparationen, enthaltend
(A) 5 bis 80 Gew.-%, vorzugsweise 20 bis 70 Gew.-%, mindestens eines organischen und/oder anorganischen Pigments,
(B) 0,1 bis 30 Gew.-%, vorzugsweise 1 bis 15 Gew.-%, mindestens eines wasserlöslichen oder wasserdispergierbaren nichtionischen Oligo- oder Polyesters, der erhältlich ist durch Polykondensation von Dicarbonsäure- und Glykolkomponenten, umfassend
   I) 10 bis 50 Gew.-%, vorzugsweise 15 bis 30 Gew.-%, einer oder mehrerer aromatischer Dicarbonsäuren, deren Ester oder Anhydride;
   II) 2 bis 50 Gew.-%, vorzugsweise 5 bis 45 Gew.-%, C₂-C₈-Alkylendiole,
   III) 3 bis 80 Gew.-%, vorzugsweise 5 bis 75 Gew.-%. Poly(C₁-C₄-alkylen)glykole und/oder Methylpoly(C₂-C₄-alkylen)glykole,
   IV) 0 bis 10 Gew.-% eines wasserlöslichen Anlagerungsproduktes von Alkylenoxid an C₁-C₂₄-Alkohole, an C₆-C₁₈-Alkylphenole oder an C₈-C₂₄-Alkylamine und
   V) 0 bis 10 Gew.-% eines oder mehrerer Polyole, jeweils bezogen auf das Gesamtgewicht Oligo- oder Polyesters;
(C) 0 bis 30 Gew.%, vorzugsweise 0,1 bis 15 Gew.-%, weiterer zur Herstellung wässriger Pigmentdispersionen üblicher Dispergiermittel und Tenside,
(D) 0 bis 50 Gew.-%, vorzugsweise 0,1 bis 20 Gew.-%, weiterer zur Herstellung wässriger Pigmentdispersionen üblicher Zusatzstoffe, und
(E) 5 bis 90 Gew.-%, vorzugsweise 5 bis 78,8 Gew.-%, Wasser,
jeweils bezogen auf das Gesamtgewicht der Pigmentpräparation.

Im Falle dass eine oder mehrere der Komponenten (C) und (D) vorhanden sind, beträgt deren Minimalkonzentration unabhängig voneinander zweckmäßigerweise mindestens 0,01 Gew.-%, bevorzugt mindestens 0,1 Gew.-%, bezogen auf das Gesamtgewicht der Pigmentpräparation. Gleiches gilt für den Oligo- bzw. Polyester: Im Falle dass eine oder mehrere der Komponenten (IV) und (V) vorhanden sind, beträgt deren Minimalkonzentration unabhängig voneinander zweckmäßigerweise mindestens 0,01 Gew.-%, bevorzugt mindestens 0,1 Gew.-%, bezogen auf das Gesamtgewicht des Oligo- bzw. Polyesters.

Die Komponente (A) der erfindungsgemäßen Pigmentpräparation ist ein feinteiliges organisches oder anorganisches Pigment oder ein Gemisch verschiedener organischer und/oder anorganischer Pigmente. Die Komponente (A) kann auch ein Farbstoff sein, der in bestimmten Lösungsmitteln unlöslich ist und in diesen Pigmentcharakter hat. Die Pigmente können sowohl in Form trockenen Pulvers als auch als wasserfeuchter Presskuchen eingesetzt werden.

Als organische Pigmente kommen Monoazo-, Disazo-, verlackte Azo-, β-Naphthol-, Naphthol AS-, Benzimidazolon-, Disazokondensations-, Azo-MetallkomplexPigmente und polycyclische Pigmente wie z.B. Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- und Diketopyrrolopyrrol-Pigmente oder ein saurer bis alkalischer Ruß aus der Gruppe der Furnaceruße und Gasruße in Betracht.

Von den genannten organischen Pigmenten sind diejenigen besonders geeignet, die für die Herstellung der Präparationen möglichst feinteilig sind, wobei bevorzugt 95 % und besonders bevorzugt 99 % der Pigmentpartikel eine Teilchengröße ≤ 500 nm besitzen. In Abhängigkeit vom verwendeten Pigment kann sich die Morphologie der Pigmentteilchen sehr stark unterscheiden, und dementsprechend kann auch das Viskositätsverhalten der Pigmentpräparationen in Abhängigkeit von der Teilchenform sehr unterschiedlich sein. Um ein ideales, newtonsches Viskositätsverhalten der Präparationen zu erhalten, sollten die Teilchen bevorzugt eine kugelförmige bis würfelförmige (mit abgeflachten Ecken) Gestalt besitzen.

Als beispielhafte Auswahl besonders bevorzugter organischer Pigmente sind dabei Rußpigmente, wie z.B. Gas- oder Furnaceruße; Monoazo- und Disazopigmente, insbesondere die Colour Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Yellow 213, Pigment Yellow 214, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 oder Pigment Brown 41; β-Naphthol- und Naphthol AS-Pigmente, insbesondere die Colour Index Pigmente Pigment Red 2, Pigment Red 3, Pigment Red 4, Pigment Red 5; Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 256, Pigment Orange 5, Pigment Orange 38 oder Pigment Brown 1; verlackte Azo- und Metallkomplexpigmente, insbesondere die Colour Index Pigmente Pigment Red 48:2, Pigment Red 48:3, Pigment Red 48:4, Pigment Red 57:1, Pigment Red 257, Pigment Orange 68 oder Pigment Orange 70; Benzimidazolinpigmente, insbesondere die Colour Index Pigmente Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 oder Pigment Brown 25; Isoindolinon- und Isoindolinpigmente, insbesondere die Colour Index Pigmente Pigment Yellow 139 oder Pigment Yellow 173; Phthalocyaninpigmente, insbesondere die Colour Index Pigmente Pigment Blue 15, Pigment Blue 15:1, Pigment Blue 15:2, Pigment Blue 15:3, Pigment Blue 15:4, Pigment Blue 15:6, Pigment Blue 16, Pigment Green 7 oder Pigment Green 36; Anthanthron-, Anthrachinon-, Chinacridon-, Dioxazin-, Indanthron-, Perylen-, Perinon- und Thioindigopigmente, insbesondere die Colour Index Pigmente Pigment Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23 oder Pigment Orange 43; Triarylcarboniumpigmente, insbesondere die Colour Index Pigmente Pigment Red 169, Pigment Blue 56 oder Pigment Blue 61; Diketopyrrolopyrrolpigmente, insbesondere die Colour Index Pigmente Pigment Red 254, Pigment Red 255, Pigment Red 264, Pigment Red 270, Pigment Red 272, Pigment Orange 71, Pigment Orange 73, Pigment Orange 81 zu rennen.
Geeignete anorganische Pigmente sind beispielsweise Titandioxide, Zinksulfide, Zinkoxide, Eisenoxide, Manganeisenoxide, Chromoxide, Ultramarin, Nickel- oder Chromantimontitanoxide, Cobaltoxide, Mischoxide des Cobalts und Aluminiums, Rutilmischphasenpigmente, Sulfide der seltenen Erden, Bismutvanadate sowie Verschnittpigmente.
Das organische Pigment ist vorzugsweise mit Ruß und/oder Titandioxid kombiniert.
Ferner eignen sich verlackte Farbstoffe wie Ca-, Mg-, Al-Lacke von sulfonsäure- und/oder carbonsäuregruppenhaltigen Farbstoffen.

Anstelle von Pigmentdispersionen lassen sich auch Dispersionen herstellen, die als Feststoffe beispielsweise natürliche feinteilige Erze, Mineralien, schwer- oder unlösliche Salze, Wachs- oder Kunststoffteilchen, Farbstoffe, Pflanzenschutz- und Schädlingsbekämpfungsmittel, UV-Absorber, optische Aufheller und Polymerisationsstabilisatoren enthalten.

Bei der Komponente (B) handelt es sich um wasserlösliche oder wasserdispergierbare nichtionische Oligo- oder Polyester, die auf Basis der folgenden Monomere aufgebaut sein können:
Als Dicarbonsäurekomponente werden aromatische Dicarbonsäuren, insbesondere Terephthalsäure, Isophthalsäure, Phthalsäure, Biphenyldicarbonsäuren, Naphthalin-dicarbonsäuren, Trimellitsäure oder Trimesinsäure eingesetzt.
Aromatische und aliphatische Monocarbonsäuren können zusätzlich zur Steuerung des Molekulargewichts eingesetzt werden. Zu den aromatischen gehören z. B. die Benzoesäure und deren o-, m=, und p-Derivate z.B. die Toluylsäure, Chlorbenzoesäure, Brombenzoesäure, Nitrobenzoesäure und Hydroxybenzoesäure. Auch mehrkernige, aromatische Monocarbonsäuren wie die a-Naphthoesäure oder die β-Naphthoesäure können eingesetzt werden. Zu den aliphatischen gehören die Monohydroxymonocarbonsäuren, insbesondere Glykolsäure, Milchsäure, ω-Hydroxystearinsäure und ω-Hydroxycapronsäure. Alle vorgenannten Carbonsäuren können auch zur Polykondensation auch in der Form ihrer Ester oder ihrer Anhydride eingesetzt werden. Beispiele hierfür sind Dimethylterephthalat, Diethylterephthalat und Phthalsäureanhydrid.

Als Glykolkomponenten kommen die unter II), III), IV) und V) genannten Verbindungsklassen in Betracht.
Beispiele für II) sind Ethylenglykol, 1,2-Propylenglykol, 1,3-Propylenglykol, 1,2-Butylenglykol, 2,3-Butylenglykol, 1,4-Butylenglykol, Pentandiole, Hexandiole, 3-Methoxy-1,2-propylenglykol..

Die Polyalkylenglykole gemäß III) leiten sich bevorzugt von Ethylenoxid, Propylenoxid, n-Butylenoxid oder Isobutylenoxid ab. Dabei kann es sich um Homopolymere, Copolymere oder Terpolymere der genannten Alkylenoxide handeln. Bei den Copolymeren kann es sich um Blockcopolymere, um statistische Copolymere oder um alternierende Copolymere handeln. Bevorzugt verwendet man Ethylendiglykol, Propylendiglykol, Polyethylenglykol, Polypropylenglykol oder deren Blockcopolymere.
Methylpolyethylenglykole können als monofunktionelle Verbindungen zur Steuerung des Molekulargewichts der Oligo- oder Polyester eingesetzt werden.

Die Alkylenoxidanlagerungsprodukte gemäß IV) sind insbesondere wasserlösliche Anlagerungsprodukte von vorzugsweise 5 bis 80 Mol Alkylenoxid, z.B.

Ethylenoxid, Propylenoxid, Butylenoxid oder deren Mischungen an 1 Mol C₁- bis C₂₄-Alkohole, C₆- bis C₁₈-Alkylphenole oder C₈- bis C₂₄-Alkylamine.

Die mehrwertigen Alkohole (Polyole) gemäß V) haben bevorzugt 3 bis 6 OH-Gruppen und sind insbesondere Glycerin, Pentaerythrit, Oligoglycerine, Trimethylolethan, Trimethylolpropan, 1,2,3-Hexantriol, Sorbit, Mannit. Es können auch Additionsprodukte von Ethylenoxid und/oder Propylenoxid an die genannten mehrwertigen Alkohole eingesetzt werden.

Oligö- und Polyester, die erfindungsgemäß als Komponente (B) eingesetzt werden können, haben vorzugsweise folgende Struktur: 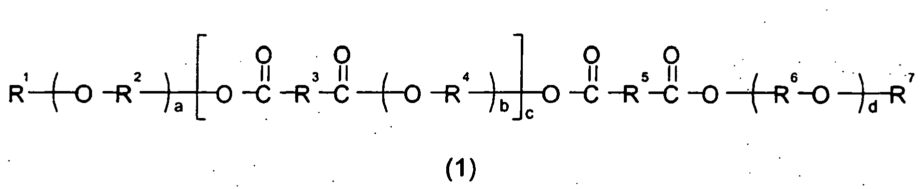 worin
- R¹ und R⁷: ein linearer oder verzweigter C₁-C₁₈-Alkylrest bedeutet, .
- R², R⁴, R⁶: unabhängig voneinander C₁-C₈-Alkylen-, z. B. Ethylen-, Propylen-, Butylen- und/oder Cycloalkylenreste, z. B. 1,4-Cyclohexylen- oder 1,4-Dimethylencyclohexylenreste sowie deren Gemische, bedeuten,
- R³ und R⁵: Arylen- oder Alkarylen-, wie z.B. 1,4-Phenylen, 1,3-Phenylen, 1,2-Phenylen, 1,8-Naphthylen, 1,4-Naphthylen, 2,2'-Biphenylen, 4,4'-Biphenylen und deren Mischungen bedeuten,
- a, b und d: jeweils eine Zahl zwischen 1 und 200 bedeuten, wobei die Summe von a, b und d mindestens 5 ist;
- c: eine Zahl zwischen 1 und 20 ist.

Bevorzugt sind Oligo- und Polyester der Formel (1), worin
- R¹ und R⁷: Methyl und/oder Ethyl, '
- R², R⁴, R⁶: Ethylen, 1,2-Propylen, oder deren Gemische,
- R³ und R⁵: 1,4-Phenylen und 1,3-Phenylen ,
- a, b und d: eine Zahl zwischen 1 und 100, wobei die Summe von a, b und d mindestens 5 ist;
- c: eine Zahl zwischen 1 und 10
bedeuten.

Bevorzugte Oligo- bzw. Polyester sind weiterhin solche der Formel (2) 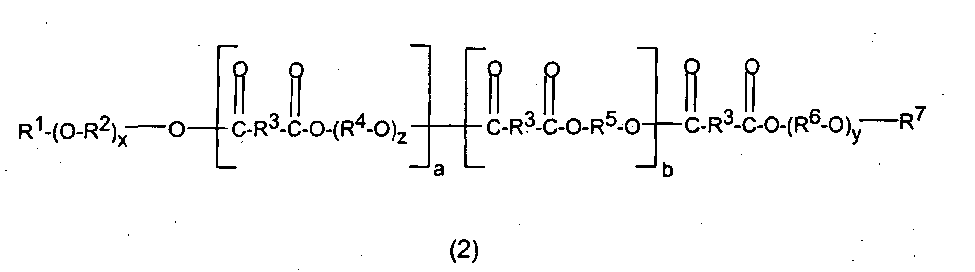 worin
- R¹ und R⁷: ein linearer oder verzweigter C₁-C₁₈-Alkylrest bedeutet,
- R² und R⁶: Ethylen ist, ....
- R³: 1,4-Phenylen oder 1,3-Phenylen ist,
- R⁴: Ethylen ist,
- R⁵: Ethylen, 1,2-Propylen oder eine Kombination davon sind,
- x und y: unabhängig voneinander eine Zahl zwischen 1 und 500 bedeuten,
- z: eine Zahl zwischen 10 und 140 bedeutet,
- a: eine Zahl zwischen 1 und 12 bedeutet,
- b: eine Zahl zwischen 7 und 40 bedeutet, wobei a + b mindestens gleich 11 ist.

Besonders bevorzugt bedeuten unabhängig voneinander in der Formel (2)
- R¹ und R⁷: einen linearen oder verzweigten C₁-C₄-Alkylrest,
- R² und R⁶: Ethylen,
- R³: 1,4-Phenylen oder 1,3-Phenylen,
- R⁴: Ethylen,
- R⁵: Ethylen, 1,2-Propylen oder eine Kombination davon,
- x und y: unabhängig voneinander eine Zahl zwischen 3 und 45,
- z: eine Zahl zwischen 18 und 70,
- a: eine Zahl zwischen 2 und 5,
- b: eine Zahl zwischen 8 und 12, a + b eine Zahl zwischen 12 und 17.

Die für die Komponente (B) beschriebenen Oligo- und Polyester sind vollständig biologisch abbaubar. Sie sind nach den OECD-Testmethoden nach der entsprechenden Zeit zu einem Großteil abgebaut.

Als Komponente (C) der erfindungsgemäßen Pigmentpräparationen dienen übliche, zur Herstellung wässriger Pigmentdispersiönen geeignete Dispergiermittel und Tenside oder Gemische solcher Substanzen. Üblicherweise werden anionische, kationische, amphotere oder nichtionische grenzflächenaktive Verbindungen hierfür verwendet. Besonders bewährt haben sich darunter Dispergiermittel, die eine oder mehrere mittel- oder langkettige Kohlenwasserstoffketten besitzen, zum Teil auch solche, die über aromatische Ringgruppen verfügen. Von der Vielzahl der Verbindungen soll an dieser Stelle nur eine Auswahl angeführt werden, ohne jedoch die Anwendbarkeit der erfindungsgemäßen Verbindungen auf diese Beispiele einzuschränken. Beispiele sind Alkylsulfate wie z.B. Laurylsulfat, Stearylsulfat oder Octadecylsulfat, primäre Alkylsulfonate wie z.B. Dodecylsulfonat, und sekundäre Alkylsulfonate, insbesondere das C₁₃-C₁₇-Alkansulfonat-Natriumsalz, Alkylphosphate, Alkylbenzolsulfonate wie beispielsweise die Dodecylbenzolsulfonsäure, ebenso alle Salze dieser Verbindungen. Ferner eignet sich Sojalecithin oder es werden Kondensationsprodukte aus Fettsäure und Taurin oder Hydroxyethansulfonsäure verwendet, ebenso Alkoxylierungsprodukte von Alkylphenolen, Rizinusölkolophoniumestern, Fettalkoholen, Fettaminen, Fettsäuren und Fettsäureamiden, diese Alkoxylierungsprodukte können desgleichen mit ionischen Endgruppen ausgestattet sein, beispielsweise als Sulfobernsteinsäure-Halbester oder auch als Sulfonsäure-, Schwefelsäure- und Phosphorsäureester, sowie deren Salze, den Sulfonaten, Sulfaten oder Phosphaten. Auch sind oxalkylierte Additionsverbindungen, die durch Umsetzung von Polyepoxiden mit Aminen oder Bisphenol-A bzw. Bisphenol-A-Derivaten mit Aminen erhalten werden, geeignet, in ähnlicher Weise auch Harnstoffderivate.

Ebenso eignen sich Umsetzungsprodukte aus substituierten und unsubstituierten länger- und kürzerkettigen Alkylphenolen sowie deren polymeren Derivaten, z.B. Formaldehyd-Kondensationsprodukten, den Novolaken. Erwähnt seien auch nichtionische alkoxylierte Styrol-Phenol-Kondensate, die durch Anlagerung von gegebenenfalls substituierten Styrolen an gegebenenfalls substituierten Phenolen und Umsetzung mit Ethylenoxid und/oder Propylenoxid erhalten werden, ebenso deren ionisch modifizierten Derivate, beispielsweise als Sulfonsäure-, Schwefelsäure- und Phosphorsäureester, sowie deren Salze, den Sulfonaten, Sulfaten oder Phosphaten. Zudem eignen sich als grenzflächenaktive Verbindungen der Komponente (C) auch Ligninsulfonate und Polykondensate aus β-Naphthalinsulfonsäure und Formaldehyd bzw. auch aus Alkylarylsulfonsäuren, Halogenarylsulfonsäure, sulfonierten Phenolen oder sulfonierten β-Naphtholen mit Formaldehyd. Schließlich eignen sich auch polymere Dispergiermittel, beispielsweise wässrige, vorzugsweise 5 bis 40 gewichtsprozentige, Acrylatharzlösungen aus gelösten Polyacrylaten, die mit Hilfe von Basen durch Neutralisation der vinylischen Säurebausteine in Lösung gebracht wurden. Die hierzu verwendeten Polyacrylate stellen häufig Copolymere dar, die im Wesentlichen aus 30 bis 80 Mol-% Monoalkylenaromaten und 20 bis 70 Mol-% Acryl- und/oder Methacrylsäuren und/oder Estern der Acryl- und/oder Methacrylsäure bestehen. Die verwendeten Polyacrylate weisen zumeist zahlenmittlere Molmassen Mₙ zwischen 1000 und 100000 g/mol, vorzugsweise 2000 bis 50000 g/mol, auf.

Als Komponente (D) werden beispielsweise kationische, anionische, amphotere oder nicht ionogene Verbindungen verwendet, die die Pigmentbenetzung fördern (Netzmittel). Auch kommen Verdicker, Konservierungsmittel, Viskositätsstabilisatoren, Mahlhilfsmittel, Füllstoffe und hydrotrope Retentionsmittel zum Einsatz.
Als Retentionsmittel eignen sich Verbindungen, die gegebenenfalls auch als Lösungsmittel dienen, beispielsweise Formamid, Harnstoff, Tetramethylharnstoff, ε-Caprolactam, Ethylenglykol, Propylenglykol, Diethylenglykol, Triethylenglykol, Polyethylenglykol, α-Methyl-ω-hydroxy-polyethylenglykolether, Dipropylenglykol, Polypropylenglykol, Copolymere aus Ethylen- und Propylenglykol, Butylglykol, Methylcellulose, Glycerin, N-Methylpyrrolidon, 1,3-Diethyl-2-imidazolidinon, Thiodiglykol, Natrium-Benzolsulfonat, Natrium-Xylolsulfonat, Natrium-Toluolsulfonat, Natrium-Cumolsulfonat, Natrium-Dodecylsulfonat, Natrium- Benzoat, Natrium-Salicylat oder Natrium-Butylmonoglykolsulfat sein. Weitere übliche Zusatzstoffe können Antiabsetzmittel, Lichtschutzmittel, Antioxidantien, Entgaser/Entschäumer, schaumreduzierende Mittel sein, Antibackmittel sowie Additive, welche die Viskosität und Rheologie günstig beeinflussen.
Als Mittel zur Regulierung der Viskosität kommen z.B. Polyvinylalkohol und Cellulosederivate infrage. Wasserlösliche natürliche oder künstliche Harze sowie Polymere als Filmbildner bzw. Bindemittel zur Erhöhung von Haft- und Abriebfestigkeit kommen ebenso in Betracht. Als pH-Regulatoren kommen organische oder anorganische Basen und Säuren zum Einsatz. Bevorzugte organische Basen sind Amine, wie z.B. Ethanolamin, Diethanolamin, Triethanolamin, N,N-Dimethylethanolamin, Diisopropylamin, Aminomethylpropanol oder Dimethylaminomethylpropanol. Bevorzugte anorganische Basen sind Natrium-, Kalium-, Lithiumhydroxid oder Ammoniak.
Weitere übliche Zusatzstoffe können auch Fette und Öle pflanzlicher und tierischer Herkunft sein, beispielsweise Rindertalg, Palmkernfett, Kokosfett, Rapsöl, Sonnenblumenöl, Leinöl, Palmöl, Sojaöl, Erdnussöl und Walöl, Baumwollsaatöl, Maisöl, Mohnöl, Olivenöl, Rizinusöl, Rüböl, Safloröl, Sojabohnenöl, Sonnenblumenöl, Heringöl, Sardinenöl. Auch sind die gesättigten und ungesättigten höheren Fettsäuren gängige Additive, z.B. Palmitinsäure, Cyprylsäure, Caprinsäure, Myristinsäure, Laurinsäure, Stearinsäure, Ölsäure, Linolsäure, Linolensäure, Capronsäure, Caprylsäure, Arachinsäure, Behensäure, Palmitoleinsäure, Gadoleinsäure, Erucasäure und Ricinolsäure, sowie deren Salze.

Zur Herstellung der Pigmentpräparationen benutztes Wasser, Komponente (E), wird vorzugsweise in Form von entsalztem oder destilliertem Wasser eingesetzt. Auch Trinkwasser (Leitungswasser) und/oder Wasser natürlichen Ursprungs kann verwendet werden.

Gegenstand der vorliegenden Erfindung ist auch ein Verfahren zur Herstellung der erfindungsgemäßen Pigmentpräparationen, dadurch gekennzeichnet, dass man die Komponente (A) in Form von Pulver, Granulat oder wässrigem Presskuchen in Gegenwart von Wasser (E) sowie der Komponente (B) dispergiert, anschließend gegebenenfalls Wasser, sowie gegebenenfalls (C) und/oder (D) zumischt und die erhaltende wässrige Pigmentdispersion mit Wasser auf die gewünschte Konzentration einstellt. Vorzugsweise werden die Komponenten (B) und gegebenenfalls (C) und/oder (D) zunächst vermischt und homogenisiert, dann die Komponente (A) in die vorgelegte Mischung eingerührt, wobei das Pigment angeteigt und vordispergiert wird. Je nach Kornhärte der eingesetzten Pigment wird anschließend gegebenenfalls unter Kühlung mit Hilfe eines Mahl- oder Dispergieraggregats feindispergiert oder feinverteilt. Dazu können Rührwerke, Dissolver (Sägezahnrührer), Rotor-Stator-Mühlen, Kugelmühlen, Rührwerkskugelmühlen wie Sand- und Perlmühlen, Schnellmischer, Knetapparaturen, Walzenstühle oder Hochleistungsperlmühlen verwendet werden. Die Feindispergierung bzw. Mahlung der Pigmente erfolgt bis zur gewünschten Teilchengrößenverteilung und kann bei Temperaturen im Bereich von 0 bis 100°C erfolgen, zweckmäßig bei einer Temperatur zwischen 10 und 70°C, vorzugsweise bei 20 bis 60°C. Im Anschluss an die Feindispergierung kann die bei 20 bis 60°C Im Anschluss an die Feindispergierung kann die Pigmentpräparation mit Wasser, vorzugsweise entionisiertem oder destilliertem Wasser, weiter verdünnt werden.

Die erfindungsgemäßen Pigmentpräparationen eignen sich zum Pigmentieren und Färben von natürlichen und synthetischen Materialien aller Art, insbesondere von wässrigen Anstrichmitteln, Dispersions- und Lackfarben (Dispersionslacken).

Ferner eignen sich die erfindungsgemäßen Pigmentpräparationen zur Einfärbung makromolekularer Materialien aller Art, z.B. von natürlichen und synthetischen Fasermaterialien, bevorzugt Cellulosefasern, auch zur Papiermassefärbung wie zur Laminateinfärbung. Weitere Anwendungen sind die Herstellung von Druckfarben, hierbei beispielsweise Textildruck-, Flexodruck-, Dekordruck- oder Tiefdruckfarben, Tapetenfarben, wasserverdünnbaren Lacken, Holzschutzsystemen, Viskose-Spinnfärbungen, Lacken, Wurstdärmen, Saatgut, Düngemittel, Glas, insbesondere Glasflaschen, sowie zur Massefärbung von Dachziegeln, zur Einfärbung für Putze, Beton, Holzbeizen, Buntstiftminen, Faserschreiber, Wachse, Paraffine, Tuschen, Pasten für Kugelschreiber, Kreiden, Wasch- und Reinigungsmittel, Schuhpflegemittel, Latex-Produkten, Schleifmifteln sowie zum Einfärben von Kunststoffen bzw. hochmolekularen Materialien aller Art. Hochmolekulare organische Materialien sind beispielsweise Celluloseether und - ester, wie Ethylcellulose, Nitrocellulose, Celluloseacetat oder Cellulosebutyrat, natürliche Harze oder Kunstharze, wie Polymerisationsharze oder Kondensationsharze, z.B. Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypopylen, Polyacrylnitril, Polyacrylsäureester, Polyamide, Polyurethane oder Polyester, Gummi, Casein, Latices, Silikon, Silikonharze, einzeln oder in Mischung.

Weiterhin eignen sich die erfindungsgemäßen Pigmentpräparationen zur Herstellung von Drucktinten für den Einsatz in allen konventionellen Ink-Jet-Druckern, insbesondere für solche, die auf dem Bubble-Jet- oder Piezo-Verfahren beruhen. Mit diesen Drucktinten kann Papier bedruckt werden, sowie natürliche oder synthetische Fasermaterialien, Folien und Kunststoffe. Zudem können die erfindungsgemäßen Pigmentpräparationen zum Bedrucken verschiedenster Arten von beschichteten oder unbeschichteten Substratmaterialien verwendet werden, so z.B. zum Bedrucken von Pappe, Karton, Holz und Hotzwerkstoffen, metallischen Materialien, Halbleitermaterialien, keramischen Materialien, Gläsern, Glas- und Keramikfasern, anorganischen Werkstoffen, Beton, Leder, Lebensmitteln, Kosmetika, Haut und Haaren. Das Substratmaterial kann dabei zweidimensional eben oder räumlich ausgedehnt, d.h. dreidimensional gestaltet sein und sowohl vollständig oder nur teilweise bedruckt oder beschichtet werden.

Die erfindungsgemäßen Pigmentpräparationen sind außerdem geeignet als Farbmittel in elektrophotographischen Tonern und Entwicklern, wie z.B. Ein- oder Zweikomponentenpulvertonern (auch Ein- oder Zweikomponenten-Entwickler genannt), Magnettoner, Flüssigtoner, Latextoner, Polymerisationstoner sowie Spezialtoner. Typische Tonerbindemittel hierbei sind Polymerisations-, Polyadditions- und Polykondensationsharze, wie Styrol-, Styrolacrylat-Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Ferner sind die erfindungsgemäßen Pigmentpräparationen geeignet als Farbmittel für Pulver und Pulverlacke, insbesondere für triboelektrisch oder elektrokinetisch versprühbare Pulverlacke, die zur Oberflächenbeschichtung von Gegenständen aus beispielsweise Metall, Holz, Kunststoff, Glas, Keramik, Beton, Textilmaterial, Papier oder Kautschuk zur Anwendung kommen. Als Pulverlackharze werden hier typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäßen Pigmentpräparationen als Farbmittel in Tinten, vorzugsweise lnk-Jet Tinten, wie z.B. auf wässriger oder nichtwässriger Basis ("Solvent Based"), Mikroemulsionstinten, UV-härtbare Tinten sowie in solchen Tinten, die nach dem Hot-Melt-Verfahren funktionieren, geeignet. Ink-Jet-Tinten enthalten im Allgemeinen insgesamt 0,5 bis 15 Gew.-%, vorzugsweise 1,5 bis 8 Gew.-%, (trocken gerechnet) der erfindungsgemäßen Pigmentpräparation. Mikroemulsionstinten basieren auf organischen Lösemitteln, Wasser und ggf. einer zusätzlichen hydrotropen Substanz (Grenzflächenvermittler). Mikroemulsionstinten enthalten 0,5 bis 15 Gew.-%, vorzugsweise 1,5 bis 8 Gew.-%, der erfindungsgemäßen Pigmentpräparation, 5 bis 99 Gew.-% Wasser und 0,5 bis 94,5 Gew.-% organisches Lösungsmittel und/oder hydrotrope Verbindung. "Solvent Based" Ink-Jet-Tinten enthalten vorzugsweise 0,5 bis 15 Gew.-% der erfindungsgemäßen Pigmentpräparation, 85 bis 99,5 Gew.-% organisches Lösungsmittel und/oder hydrotrope Verbindungen. UV-härtbare Tinten enthalten im wesentlichen 0,5 bis 30 Gew.-% der erfindungsgemäßen Pigmentpräparation, 0,5 bis 95 Gew.-% Wasser, 0,5 bis 95 Gew.-% eines organischen Lösungsmittels oder Lösungsmittelgemisches, 0,5 bis 50 Gew.-% eines strahlungshärtbaren Bindemittels und gegebenenfalls 0 bis 10 Gew.-% eines Photoinitiators. Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60°C und ca. 140°C liegt. Hot-Melt-Ink-Jet-Tinten bestehen z.B. im Wesentlichen aus 20 bis 90 Gew.-% Wachs und 1 bis 10 Gew.-% der erfindungsgemäßen Pigmentpräparation. Weiterhin können 0 bis 20 Gew.% eines zusätzlichen Polymers (als "Farbstofflöser"), 0 bis 5 Gew.-% Dispergierhilfsmittel, 0 bis 20 Gew.-% Viskositätsveränderer, 0 bis 20 Gew.-% Plastifizierer, 0 bis 10 Gew.-% Klebrigkeifszusatz, 0 bis 10 Gew.-% Transparenzstabilisator (verhindert z.B. Kristallisation der Wachse) sowie 0 bis 2 Gew.-% Antioxidans enthalten sein.

Außerdem sind die erfindungsgemäßen Pigmentpräparationen auch geeignet als Farbmittel für Farbfilter ("Colour'Filter") für "Flat Panel Displays", sowohl für die additive wie für die subtraktive Farbetzeugung, ferner für "Photo-Resists", sowie als Farbmittel für elektronische Tinten ("Electronic Inks" bzw. "e-inks") oder elektronisches Papier ("Electronic Paper" bzw. "e-paper").

### Beispiele

### Beurteilung einer Pigmentpräparation

Die Bestimmung der Farbstärke und des Farbtons erfolgte nach DIN 55986. Für den "Rub-Out-Test" wurde die Dispersionsfarbe oder der Lack nach Mischen mit der Pigmentdispersion auf eine Lackkarte aufgetragen. Anschließend wurde mit dem Finger auf dem unteren Teil der Lackkarte nachgerieben. Unverträglichkeit lag vor, wenn die nachgeriebene Fläche dann kräftiger gefärbt ist als die angrenzende, nicht nachbehandelte Fläche (der "Rub-Out-Test" wird in DE 2 638 946 beschrieben). Die coloristischen Daten und die Verträglichkeiten mit den einzufärbenden Medien wurden mit acht verschiedenen Weißdispersionen und bis zu zwei verschiedenen Lacken ermittelt:
1. Weißdispersion A (für Außenanstriche, Wasserbasis, 20 % TiO₂
2. Weißdispersion B (für Außenanstriche, Wasserbasis, 1 % TiO₂
3. Weißdispersion C (für Außenanstriche, Wasserbasis, 13,4 % TiO₂
4. Weißdispersion D (für Außenanstriche, Wasserbasis, 22,6 % TiO₂
5. Weißdispersion E (für Außenanstriche, Wasserbasis, Bindemittel Polysiloxanemulsion, TiO₂, Talkum, Calciumcarbonat)
6. Weißdispersion F (für Innenanstriche, Wasserbasis, Polymerdispersion, frei von Lösungsmittel und Weichmachern, emissionsarm, TiO₂, Calciumcarbonat)
7. Weißdispersion G (Dispersionsfarbe speziell für Fassaden, Wasserbasis, Polymerdispersion, Weißpigmente, anorganische Pigmente, silikatische Füllstoffe, Talkum, Calciumcarbonat)
8. Weißdispersion H (für Innenanstriche, Wasserbasis, Polyacrylate, TiO₂, Calciumcarbonat)
9. Weißlack A (Wasserbasis, Bindemittel Viacryl VSC^{®}, 20 % TiO₂)
10. Weißlack B (Alkydharzbasis, Bindemittel Vialkyd AS^{®}, organisches Lösungsmittel, 27 % TiO₂).

Die Beurteilung der Eintrockenbeständigkeit erfolgte, indem die Pigmentpräparation mit einem 200 µm Rakel auf eine Polyester-Klarsichtfolie aufgezogen und klimatisiert gelagert wurde. Nach wenigen Minuten, einer halben Stunde, einem Tag, drei und sieben Tagen wurde eine Bestimmung der Eintrocknung vorgenommen.
Die Viskosität wurde mit einem Kegel-Platte-Viskosimeter (Roto Visco 1) der Firma Haake bei 20°C bestimmt (Titankegel: ∅ 60 mm, 1 °), wobei die Abhängigkeit der Viskosität von dem Schergefälle in einem Bereich zwischen 0 und 200 s⁻1 untersucht wurde. Die Viskositäten wurden bei einem Schergefälle von 60 s⁻¹ gemessen.

Für eine Beurteilung der Lagerstabilität der Dispersionen wurde die Viskosität direkt nach der Herstellung der Präparation gemessen, sowie nach vierwöchiger Lagerung bei 50°C und nach Lagerung in einer Klimakammer mit < 0°C.

### Herstellung einer Pigmentpräparation

Das Pigment wurde, entweder als Pulver, Granulat oder als Presskuchen, zusammen mit den Dispergiermitteln und den anderen Zusätzen in entionisiertem Wasser angeteigt und dann mit einem Dissolver (z.B. von der Firma VMA-Getzmann GmbH, Type AE3-M1) oder einer anderen geeigneten Apparatur homogenisiert und vordispergiert. Die anschließende Feindispergierung erfolgte mit Hilfe einer Perlmühle (z.B. mit AE3-M1 von VMA-Getzmann) oder aber einem anderen geeigneten Dispergieraggregat, wobei die Mahlung mit Siliquarzitperlen oder Zirkonmischoxidperlen der Größe d = 1 mm unter Kühlung bis zur gewünschten Farbstärke und Coloristik erfolgte. Im Anschluss wurde die Dispersion mit entionisiertem Wasser auf die gewünschte Pigmentendkonzentration eingestellt, die Mahlkörper abgetrennt und die Pigmentpräparation isoliert.

Die in den folgenden Beispielen beschriebenen Pigmentpräparationen wurden nach dem zuvor beschriebenen Verfahren hergestellt, wobei die folgenden Bestandteile in den angegebenen Mengen so verwendet wurden, dass 100 Teile der jeweiligen Pigmentpräparation entstehen. In den nachfolgenden Beispielen bedeuten Teile Gewichtsteile.

### Beispiel 1

| | |
|---|---|
| 20 Teile | C.l. Pigment Violett 23 (Komponente A) |
| 11 Teile | Komponente (B), Formel (1) mit R¹ und R⁷ = Methyl, R² und R⁶ = Ethylen, R³ und R⁵ = 1,4-Phenylen, R⁴ = 1,2-Propylen, a, b und d ist in der Summe im Durchschnitt circa 35, c ist im Durchschnitt circa 2 |
| 10 Teile | α-Methyl-ω-hydroxy-polyethylenglykolether (Mn 470 - 530 g/mol) |
| | (Komponente D) |
| 8 Teile | oxalkylierte Additionsverbindung aus Bisphenol-A und einem Amin, nichtionisch (Komponente C) |
| 0,2 Teile | Konservierungsmittel (Komponente D) |
| Rest | Wasser (Komponente E). |

Die Pigmentpräparation hat eine hohe Farbstärke und ist flockungsstabil. In alle acht Weißdispersionen lässt sie sich unter leichter Verteilbarkeit sehr gut einarbeiten. Der Rub-Out-Test zeigt in den sechs Fällen A, C, D, F, G und H keine Farbstärkeunterschiede im Vergleich zur nachgeriebenen Fläche. Bei den Weißdispersionen B und E zeigen sich beim Rub-Out-Test geringe Farbunterschiede, jedoch ist die Pigmentpräparation zu diesen Systemen noch gut verträglich. Die Pigmentpräparation besitzt gute rheologische Eigenschaften, erweist sich als gut fließfähig und lagerstabil. Die Viskosität nach der Herstellung beträgt 468 mPa·s. Weiterhin verfügt die Präparation über eine sehr gute Eintrockenbeständigkeit, da sie innerhalb von 30 Minuten zu einem elastischen Film trocknet, der vom Träger nicht abbröckelt. Auch nach sieben Tagen liegt ein elastischer Film vor, der nicht vom Träger abgeplatzt ist.

### Beispiel 2

| | |
|---|---|
| 40 Teile | C.l. Pigment Schwarz 7 (Komponente A) |
| 8,5 Teile | Komponente (B), Formel (1) mit R¹ und R⁷ = Methyl, R² und R⁶ = Ethylen, R³ und R⁵ = 1,4-Phenylen, R⁴ = 1,2-Propylen, a, b und d ist in der Summe im Durchschnitt circa 90, c ist im Durchschnitt circa 5 |
| 10 Teile | α-Methyl-ω-hydroxy-polyethylenglykolether (Mn 470 - 530 g/mol) (Komponente D) |
| 2 Teile | oxalkylierte Additionsverbindung aus Bisphenol-A und einem Amin, nichtionisch (Komponente C) |
| 0,5 Teile | Natrium-di-2-ethylhexylsulfosuccinat (Komponente C) |
| 0,9 Teile | Konservierungsmittel (Komponente D) |
| Rest | Wasser (Komponente E). |

Die Pigmentpräparation hat eine hohe Farbstärke und ist besonders flockungsstabil. In alle acht Weißdispersionen lässt sie sich unter leichter Verteilbarkeit sehr gut einarbeiten. Der Rub-Out-Test zeigt in allen Fällen keine Farbstärkeunterschiede im Vergleich zur nachgeriebenen Fläche. Bei diesen acht Weißdispersionen ist die Präparation "universalverträglich". Die Pigmentpräparation besitzt gute rheologische Eigenschaften, erweist sich als gut fließfähig und lagerstabil. Die Viskosität nach der Herstellung beträgt 617 mPa·s. Weiterhin verfügt die Präparation über eine sehr gute Eintrockenbeständigkeit, da sie innerhalb von 30 Minuten zu einem elastischen Film trocknet, der vom Träger nicht abbröckelt. Auch nach sieben Tagen liegt ein elastischer Film vor, der nicht vom Träger abgeplätzt ist.

### Vergleichsbeispiel 2a

| | |
|---|---|
| 40 Teile | C.l. Pigment Schwarz 7 (Komponente A) |
| 8,5 Teile | oxalkylierter Fettalkohol, nichtionisch (Komponente C) |
| 10 Teile | α-Methyl-ω-hydroxy-polyethylenglykolether (Mn 470 - 530 g/mol) (Komponente D) |
| 2 Teile | oxalkylierte Additionsverbindung aus Bisphenol-A und einem Amin, nichtionisch (Komponente C) |
| 0,5 Teile | Natrium-di-2-ethylhexylsulfosuccinat (Komponente C) |
| 0,9 Teile | Konservierungsmittel (Komponente D) |
| Rest | Wasser (Komponente E). |

Die Pigmentpräparation hat eine hohe Farbstärke mit reinem Farbton, ist jedoch in verschiedenen Weißdispersionen und Lacken nicht flockungsstabil. Nur in drei getestete Weißdispersionen lässt sich die Pigmentpräparation unter leichter Verteilbarkeit gut einarbeiten (A, D, H). Hier zeigt der Rub-Out-Test keine Farbstärkeunterschiede. In vier Weißdispersionen (B, C, F, G) und in dem Weißlack A zeigt der Rub-Out-Test Farbunterschiede, so dass Flockungserscheinungen nachgewiesen werden können. In die Weißdispersion E und in den Weißlack B lässt sich die Pigmentpräparation nicht einarbeiten.

### Beispiel 3

| | |
|---|---|
| 40 Teile | C.l. Pigment Rot 146 (Komponente A) |
| 7 Teile | Komponente (B), Formel (1) mit R¹ und R⁷ = Methyl, R² und . R⁶ = Ethylen, R³ und R⁵ = 1,4-Phenylen, R⁴ = 1 ,2-Propylen, a, b und d ist in der Summe im Durchschnitt circa 35, c ist im Durchschnitt circa 2 |
| 20 Teile | Propylenglykol (Komponente D) |
| 4 Teile | oxalkylierte Additionsverbindung aus Bisphenol-A und einem Amin, nichtionisch (Komponente C) |
| 0,2 Teile | Konservierungsmittel (Komponente D) |
| Rest | Wasser (Komponente E). |

Die Pigmentpräparation hat eine hohe Farbstärke und ist besonders flockungsstabil. In alle acht Weißdispersionen und in den Weißlack A lässt sie sich unter leichter Verteilbarkeit sehr gut einarbeiten. Der Rub-Out-Test zeigt in allen Fällen keine Farbstärkeunterschiede im Vergleich zur nachgeriebenen. Bei den getesteten Applikationssystemen ist die Präparation "universalverträglich". Die Pigmentpräparation besitzt gute rheologische Eigenschaften, erweist sich als gut fließfähig und lagerstabil. Die Viskosität nach der Herstellung beträgt 744 mPa·s. Weiterhin verfügt die Präparation über eine sehr gute Eintrockenbeständigkeit, da sie innerhalb von 30 Minuten zu einem Film trocknet, oder vom Träger nicht abbröckelt.

### Beispiel 4

| | |
|---|---|
| 35 Teile | C.l. Pigment Gelb 154 (Komponente A) |
| 4,5 Teile | Komponente (B), Formel (2) mit R¹ und R⁷ = Methyl, R² und R⁶ = Ethylen, R³ = 1,4-Phenylen, R⁴ = Ethylen, R⁵ = Ethylen und 1,2-Propylen als statistisches Gemisch, x und y ist jeweils im Durchschnitt circa 45, z ist im Durchschnitt 35, a ist im Durchschnitt circa 3, b ist im Durchschnitt circa 10 |
| 15 Teile | Propylenglykol (Komponente D) |
| 0,9 Teile | Konservierungsmittel (Komponente D) |
| Rest | Wasser (Komponente E). |

Die Pigmentpräparation hat eine hohe Farbstärke mit sehr reinem Farbton und ist besonders flockungsstabil. In alle acht Weißdispersionen A bis H und in den Weißlack A lässt sie sich unter leichter Verteilbarkeit sehr gut einarbeiten. Der Rub-Out-Test zeigt in allen Fällen keine Farbstärkeunterschiede im Vergleich zur nachgeriebenen Fläche. Somit ist die Präparation zu den getesteten Dispersionen "universalverträglich". Die Pigmentpräparation besitzt ausgezeichnete rheologische Eigenschaften, erweist sich als gut fließfähig und lagerstabil. Die Viskosität nach der Herstellung beträgt 37 mPa·s. Weiterhin verfügt die Präparation über eine gute Eintrockenbeständigkeit, da sie innerhalb von 30 Minuten zu einem Film trocknet, der vom Träger nicht abbröckelt.

### Beispiel 5

| | |
|---|---|
| 40 Teile | C.l. Pigment Gelb 97 (Komponente A) |
| 11 Teile | Komponente (B), Formel (1) mit R¹ und R⁷ = Methyl, R² und R⁶ = Ethylen, R³ und R⁵ = 1,4-Phenylen, R⁴ = 1,2-Propylen, a, b und d ist in der Summe im Durchschnitt circa 35, c ist im Durchschnitt circa 2 |
| 10 Teile | Propylenglykol (Komponente D) |
| 5 Teile | oxalkylierter Fettalkohol, nichtionisch (Komponente C) .. |
| 0,2 Teile | Konservierungsmittel (Komponente D) |
| Rest | Wasser (Komponente E). |

Die Pigmentpräparation hat eine hohe Farbstärke und ist flockungsstabil. In alle acht Weißdispersionen lässt sie sich unter leichter Verteilbarkeit sehr gut einarbeiten. Der Rub-Out-Test zeigt in allen Fällen keine Farbstärkeunterschiede im Vergleich zur nachgeriebenen Fläche. Die Pigmentpräparation besitzt gute rheologische Eigenschaften, erweist sich als gut fließfähig und lagerstabil. Die Viskosität nach der Herstellung beträgt 435 mPa·s. Weiterhin verfügt die Präparation über eine gute Eintrockenbeständigkeit, da sie innerhalb von 30 Minuten zu einem Film trocknet, der vom Träger nicht abbröckelt.

### Beispiel 6

| | |
|---|---|
| 40 Teile | C.l. Pigment Gelb 151 (Komponente A) |
| 3 Teile | Komponente (B), Formel (1) mit R¹ und R⁷ = Methyl, R² und R⁶ = Ethylen, R³ und R⁵ = 1,4-Phenylen, R⁴ = 1,2-Propylen, a, b und d ist in der Summe im Durchschnitt circa 35, c ist im Durchschnitt circa 2 |
| 10 Teile | Polyethylenglykol (Mn 260 - 240 g/mol) (Komponente D) |
| 1 Teile | oxalkylierter Fettalkohol, nichtionisch (Komponente C) |
| 0,5 Teile | Entschäumer (Komponente D) |
| 0,2 Teile | Konservierungsmittel (Komponente D) |
| Rest | Wasser (Komponente E). |

Die Pigmentpräparation hat eine hohe Farbstärke mit reinem Farbton und ist flockungsstabil. In alle acht Weißdispersionen und in die zwei verschiedenen Lacke lässt sie sich unter leichter Verteilbarkeit gut einarbeiten. Der Rub-Out-Test zeigt in allen Fällen keine Farbstärkeunterschiede im Vergleich zur nachgeriebenen Fläche. Somit ist die Präparation in den getestet Systemen "universalverträglich". Die Pigmentpräparation besitzt ausgezeichnete rheologische Eigenschaften, erweist sich als gut fließfähig und lagerstabil. Die Viskosität nach der Herstellung beträgt 34 mPa·s. Weiterhin verfügt die Präparation über eine gute Eintrockenbeständigkeit, da sie innerhalb von 30 Minuten zu einem Film trocknet, der vom Träger nicht abbröckelt.

### Beispiel 7

| | |
|---|---|
| 20 Teile | C.l. Pigment Rot 122 (Komponente A) |
| 4 Teile | Komponente (B), Formel (1) mit R¹ und R⁷ = Methyl, R² und |
| | R⁶ = Ethylen, R³ und R⁵ = 1,4-Phenylen, R⁴ = 1,2-Propylen, a, b und d ist in der Summe im Durchschnitt circa 35, c ist im Durchschnitt circa 2 |
| 9 Teile | Polyethylenglykol (Mn 260 - 240 g/mol) (Komponente D) |
| 1 Teile | oxalkylierter Fettalkohol, nichtionisch (Komponente C) |
| 0,5 Teile | Entschäumer (Komponente D) |
| 0,2 Teile | Konservierungsmittel (Komponente D) |
| Rest | Wasser (Komponente E). |

Die Pigmentpräparation hat eine hohe Farbstärke mit reinem Farbton und ist flockungsstabil. In alle acht Weißdispersionen lässt sie sich unter leichter Verteilbarkeit gut einarbeiten. Der Rub-Out-Test zeigt in allen Fällen keine Farbstärkeunterschiede im Vergleich zur nachgeriebenen Fläche. Die Pigmentpräparation besitzt ausgezeichnete rheologische Eigenschaften, erweist sich als gut fließfähig und lagerstabil. Die Viskosität nach der Herstellung beträgt 27 mPa·s. Weiterhin verfügt die Präparation über eine gute Eintrockenbeständigkeit, da sie innerhalb von 30 Minuten zu einem Film trocknet, der vom Träger nicht abbröckelt.

## Patentansprüche

1. Wässrige Pigmentpräparation, enthaltend
(A) 5 bis 80 Gew.-% mindestens eines organischen und/oder anorganischen Pigments,
(B) 0,1 bis 30 Gew.-% mindestens eines wasserlöslichen oder wasserdispergierbaren nichtionischen Oligo- oder Polyesters, der erhältlich ist durch Polykondensation von Dicarbonsäure- und Glykolkomponenten, umfassend
I) 10 bis 50 Gew.% einer oder mehrerer aromatischer Dicarbonsäuren, deren Ester oder Anhydride;
II) 2 bis 50 Gew.-% C₂-C₈-Alkylen-diole,
III) 3 bis 80 Gew.-% Poly(C₁-C₄-alkylen)glykole und/oder Methylpoly(C₂-C₄-alkylen)glykole,
IV) 0 bis 10 Gew.% eines wasserlöslichen Anlagerungsproduktes von Alkylenoxid an C₁-C₂₄-Alkohole, an C₆-C₁₈-Alkylphenole oder an C₈-C₂₄-Alkylamine und
V) 0 bis 10 Gew.% eines oder mehrerer Polyole, jeweils bezogen auf das Gesamtgewicht Oligo- oder Polyesters;
(C) 0 bis 30 Gew.-% weiterer zur Herstellung wässriger Pigmentdispersionen üblicher Dispergiermittel und Tenside,
(D) 0 bis 50 Gew.-% weiterer zur Herstellung wässriger Pigmentdispersionen üblicher Zusatzstoffe, und
(E) 5 bis 90 Gew.-% Wasser,
jeweils bezogen auf das Gesamtgewicht der Pigmentpräparation.

2. Pigmentpräparation nach Anspruch 1, enthaltend
(A) 20 bis 70 Gew.-% mindestens eines organischen und/oder anorganischen Pigments,
(B) 1 bis 15 Gew.-% mindestens eines wasserlöslichen oder wasserdispergierbaren nichtionischen Oligo- oder Polyesters, der erhältlich ist durch Polykondensation von Dicarbonsäure- und Glykolkomponenten, umfassend
I) 15 bis 30 Gew.-% einer oder mehrerer aromatischer Dicarbonsäuren, deren Ester oder Anhydride;
II) 5 bis 45 Gew.-% C₂-C₈-Alkylen-diole,
III) 5 bis 75 Gew.-% Poly(C₁-C₄-alkylen)glykole und/oder Methylpoly-(C₂-C₄-alkylen)glykole,
IV) 0 bis 10 Gew.-% eines wasserlöslichen Anlagerungsproduktes von Alkylenoxid an C₁-C₂₄-Alkohole, an C₆-C₁₈-Alkylphenole oder an C₈-C₂₄-Alkylamine und
V) 0 bis 10 Gew.-% eines oder mehrerer Polyole, jeweils bezogen auf das Gesamtgewicht Oligo- oder Polyesters;
(C) 0,1 bis 15 Gew.-% weiterer zur Herstellung wässriger Pigmentdispersionen üblicher Dispergiermittel und Tenside,
(D) 0,1 bis 20 Gew.% weiterer zur Herstellung wässriger Pigmentdispersionen üblicher Zusatzstoffe, und
(E) 5 bis 78,8 Gew.% Wasser,
jeweils bezogen auf das Gesamtgewicht der Pigmentpräparation.

3. Pigmentpräparation nach einem oder mehreren der Ansprüche 1 bis 2, **dadurch gekennzeichnet, dass** das organische Pigment (A) mindestens ein Pigment aus der Gruppe der Monoazo-, Disazo-, vedackten Azo-, β-Naphthol-, Naphthol AS-, Benzimidazolon-, Disazokondensations-, Azo-Metallkomplex-, Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolin-, Isoindolinon- oder Diketopyrrolopyrrol-Pigmente oder ein saurer bis alkalischer Ruß aus der Gruppe der Furnaceruße oder Gasruße, oder eine Kombination davon ist.

4. Pigmentpräparation nach einem oder mehreren der Ansprüche 1 bis 2, **dadurch gekennzeichnet, dass** das anorganische Pigment (A) mindestens ein Pigment aus der Gruppe der Titandioxide, Zinksulfide, Zinkoxide, Eisenoxide, Manganeisenoxide, Chromoxide, Ultramarin, Nickel- oder Chromantimontitanoxide, Cobaltoxide, Mischoxide des Cobalts und Aluminiums, Rutilmischphasenpigmente, Sulfide der seltenen Erden, Bismutvanadate sowie Verschnittpigmente, oder eine Kombination davon ist.

5. Pigmentpräparation nach einem oder mehreren der Ansprüche 1 bis 4, **dadurch gekennzeichnet, dass** das organische Pigment mit Ruß und/oder Titandioxid kombiniert ist.

6. Pigmentpräparation nach einem oder mehreren der Ansprüche 1 bis 5, **dadurch gekennzeichnet, dass** Komponente (B) einer oder mehrerer Verbindungen der Formel (1) entspricht: 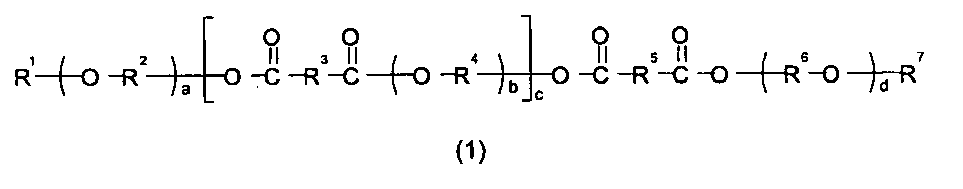 worin
R¹ und R⁷ ein linearer oder verzweigter C₁-C₁₈-Alkylrest bedeutet,
R², R⁴, R⁶ unabhängig voneinander (C₁-C₈)-Alkylen,
R³ und R⁵ Arylen oder Alkarylen,
a, b und d eine Zahl zwischen 1 und 200 ist, wobei die Summe von a, b und d mindestens 5 ist,
c eine Zahl zwischen 1 und 20 ist.

7. Pigmentpräparation nach Anspruch 6, **dadurch gekennzeichnet, dass**
R¹ und R⁷ Methyl und/oder Ethyl,
R², R⁴, R⁶ Ethylen, 1,2-Propylen, oder deren Gemische,
R³ und R⁵ 1,4-Phenylen und 1,3-Phenylen ,
a, b und d eine Zahl zwischen 1 und 100, wobei die Summe von a, b und d mindestens 5 ist;
c eine Zahl zwischen 1 und 10
bedeuten.

8. Pigmentpräparation nach einem oder mehreren der Ansprüche 1 bis 7, **dadurch gekennzeichnet, dass** Komponente (B) einer oder mehrerer Verbindungen der Formel (2) entspricht: 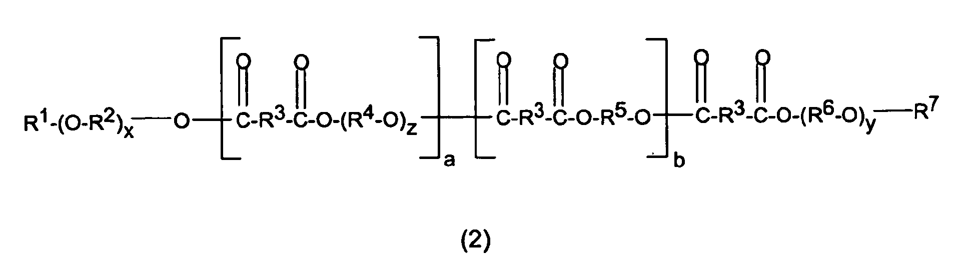 worin
R¹ und R⁷ ein linearer oder verzweigter C₁-C₁₈-Alkylrest bedeutet,
R² und R⁶ Ethylen ist,
R³ 1,4-Phenylen oder 1,3-Phenylen ist,
R⁴ Ethylen ist,
R⁵ Ethylen, 1,2-Propylen oder eine Kombination davon ist,
x und y unabhängig voneinander eine Zahl zwischen 1 und 500 bedeuten,
z eine Zahl zwischen 10 und 140 bedeutet,
a eine Zahl zwischen 1 und 12 bedeutet,
b eine Zahl zwischen 7 und 40 bedeutet, wobei a + b mindestens gleich 11 ist.

9. Pigmentpräparation nach Anspruch 8, **dadurch gekennzeichnet, dass**
R¹ und R⁷ ein linearer oder verzweigter C₁-C₄-Alkylrest bedeutet,
R² und R⁶ Ethylen ist,
R³ 1,4-Phenylen oder 1,3-Phenylen ist,
R⁴ Ethylen ist,
R⁵ Ethylen, 1,2-Propylen oder eine Kombination davon ist,
x und y unabhängig voneinander eine Zahl zwischen 3 und 45 bedeuten,
z eine Zahl zwischen 18 und 70 bedeutet,
a eine Zahl zwischen 2 und 5 bedeutet,
b eine Zahl zwischen 8 und 12, a + b eine Zahl zwischen 12 und 17
bedeutet.

10. Verfahren zur Herstellung einer Pigmentpräparation gemäß einem oder mehreren der Ansprüche 1 bis 9, **dadurch gekennzeichnet, dass** die man die Komponente (A) in Form von Pulver, Granulat oder wässrigem Presskuchen in Gegenwart von Wasser (E) sowie der Komponente (B) dispergiert, anschließend gegebenenfalls Wasser, sowie gegebenenfalls (C) und/oder (D) zumischt und die erhaltende wässrige Pigmentdispersion gegebenenfalls mit Wasser verdünnt.

11. Verwendung einer Pigmentpräparation nach einem oder mehreren der Ansprüche 1 bis 9 zum Pigmentieren natürlicher oder synthetischer Materialien.

12. Verwendung nach Anspruch 11 zum Pigmentieren und Färben von wässrigen Anstrichmitteln, Dispersions- und Lackfarben (Dispersionslacken), wasserverdünnbaren Lacken, Tapetenfarben und Druckfarben.

13. Verwendung nach Anspruch 11 zum Pigmentieren und Färben von natürlichen und synthetischen Fasermaterialien, Cellulosefasern, zur Papiermassefärbung und Laminateinfärbung sowie zur Herstellung von Drucktinten, Ink-Jet-Tinten, elektrophotographischen Tonern, Pulverlacken, Farbfiltern, elektronischen Tinten und "Electronic Papier, Holzschutzsystemen, Viskose-Spinnfärbung, Wurstdärmen, Saatgut, Düngemitteln, Glasflaschen, sowie zur Massefärbung von Dachziegeln, zur Einfärbung für Putze, Beton, Holzbeizen, Buntstiftminen, Faserschreibern. Wachsen, Paraffinen, Tuschen, Pasten für Kugelschreiber, Kreiden, Wasch- und Reinigungsmitteln, Schuhpflegemitteln, Latex-Produkten, Schleifmitteln sowie zum Einfärben von Kunststoffen.

## Claims

1. An aqueous pigment preparation comprising
(A) 5% to 80% by weight of at least one organic and/or inorganic pigment,
(B) 0.1 % to 30% by weight of at least one water-soluble or water-dispersible nonionic oligoester or polyester which is obtainable by polycondensing dicarboxylic acid components and glycol components comprising
I) 10% to 50% by weight of one or more dicarboxylic acids, their esters or anhydrides;
II) 2% to 50% by weight of C₂-C₈ alkylenediols,
III) 3% to 80% by weight of poly(C₁-C₄ alkylene) glycols and/or methylpoly(C₂-C₄ alkylene) glycols,
IV) 0 to 10% by weight of a water-soluble adduct of alkylene oxide with C₁-C₂₄ alcohols, with C₆-C₁₈ alkylphenols or with C₈-C₂₄ alkylamines, and
V) 0 to 10% by weight of one or more polyols, based in each case on the total weight of oligoester or polyester;
(C) 0 to 30% by weight of further dispersants and surfactants conventional for producing aqueous pigment dispersions,
(D) 0 to 50% by weight of further additives conventional for producing aqueous pigment dispersions, and
(E) 5% to 90% by weight of water,
based in each case on the total weight of the pigment preparation.

2. The pigment preparation as claimed in claim 1, comprising
(A) 20% to 70% by weight of at least one organic and/or inorganic pigment,
(B) 1 % to 15% by weight of at least one water-soluble or water-dispersible nonionic oligoester or polyester which is obtainable by polycondensing dicarboxylic acid components and glycol components comprising
I) 15% to 30% by weight of one or more dicarboxylic acids, their esters or anhydrides;
II) 5% to 45% by weight of C₂-C₈ alkylenediols,
III) 5% to 75% by weight of poly(C₁-C₄ alkylene) glycols and/or methylpoly(C₂-C₄ alkylene) glycols,
IV) 0% to 10% by weight of a water-soluble adduct of alkylene oxide with C₁-C₂₄ alcohols, with C₆-C₁₈ alkylphenols or with C₈-C₂₄ alkylamines, and
V) 0% to 10% by weight of one of more polyols, based in each case on the total weight of oligoester or polyester:
(C) 0.1 % to 15% by weight of further dispersants and surfactants conventional for producing aqueous pigment dispersions,
(D) 0.1 % to 20% by weight of further additives conventional for producing aqueous pigment dispersions, and
(E) 5% to 78.8% by weight of water, based in each case on the total weight of the pigment preparation.

3. The pigment preparation as claimed in one or more of claims 1 to 2, wherein the organic pigment (A) is at least one pigment from the group consisting of monoazo, disazo, laked azo, β-naphthol, naphthol AS, benzimidazolone, disazo condensation, azo metal complex, phthalocyanine, quinacridone, perylene, perinone, thioindigo, anthanthrone, anthraquinone, flavanthrone, indanthrone, isoviolanthrone, pyranthrone, dioxazine, quinophthalone, isoindoline, isoindolinone or diketopyrrolopyrrole pigments or an acidic to alkaline carbon black from the group consisting of furnace blacks or gas blacks, or a combination thereof.

4. The pigment preparation as claimed in one or more of claims 1 to 2, wherein the inorganic pigment (A) is at least one pigment from the group consisting of titanium dioxides, zinc sulfides, zinc oxides, iron oxides, manganese iron oxides, chromium oxides, ultramarine, nickel or chromium antimony titanium oxides, cobalt oxides, mixed oxides of cobalt and aluminum, rutile mixed-phase pigments, sulfides of rare earths, bismuth vanadates, and extender pigments, or a combination thereof.

5. The pigment preparation as claimed in one or more of claims 1 to 4, wherein the organic pigment is combined with carbon black and/or titanium dioxide.

6. The pigment preparation as claimed in one or more of claims 1 to 5, wherein component (B) corresponds to one or more compounds of the formula (1): 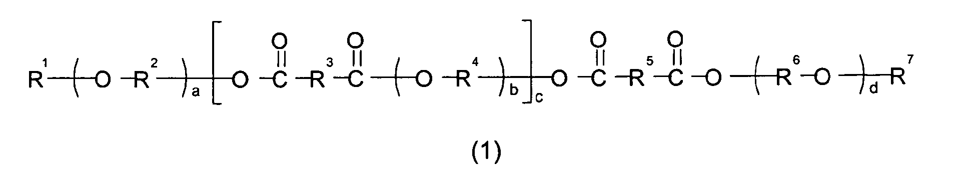 in which
R¹ and R⁷ are a linear or branched G₁-C₁₈ alkyl radical,
R², R⁴, and R⁶ independently of one another are C₁-C₈ alkylene,
R³ and R⁵ are arylene or alkarylene,
a, b, and d are a number between 1 and 200, the sum of a, b, and d being at least 5,
c is a number between 1 and 20.

7. The pigment preparation as claimed in claim 6, wherein
R¹ and R⁷ are methyl and/or ethyl,
R², R⁴, and R⁶ are ethylene, 1,2-propylene or mixtures thereof,
R³ and R⁵ are 1,4-phenylene and 1,3-phenylene,
a, b and d are a number between 1 and 100, the sum of a, b, and d being at least 5;
c is a number between 1 and 10.

8. The pigment preparation as claimed in one or more of claims 1 to 7, wherein component (B) corresponds to one or more compounds of the formula (2): 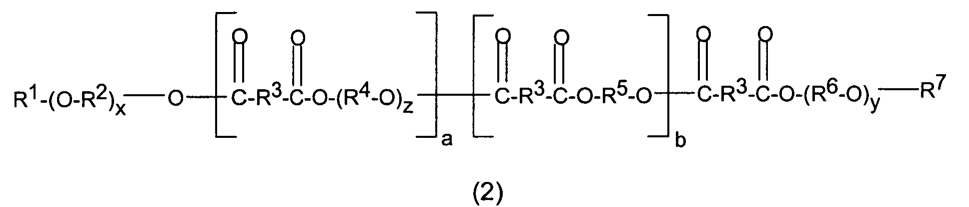 in which
R¹ and R⁷ are a linear or branched C₁-C₁₈ alkyl radical,
R² and R⁶ are ethylene,
R³ is 1,4-phenylene or 1,3-phenylene,
R⁴ is ethylene,
R⁵ is ethylene, 1,2-propylene or a combination thereof,
x and y independently of one another are a number between 1 and 500,
z is a number between 10 and 140,
a is a number between 1 and 12,
b is a number between 7 and 40, with a + b being at least 11.

9. The pigment preparation as claimed in claim 8, wherein
R¹ and R⁷ are a linear or branched C₁-C₄ alkyl radical,
R² and R⁶ are each ethylene,
R³ is 1,4-phenylene or 1,3-phenylene,
R⁴ is ethylene,
R⁵ is ethylene, 1,2-propylene or a combination thereof,
x and y independently of one another are a number between 3 and 45,
z is a number between 18 and 70,
a is a number between 2 and 5,
b is a number between 8 and 12, a + b being a number between 12 and 17.

10. A process for producing a pigment preparation as claimed in one or more of claims 1 to 9, which comprises dispersing component (A) in the form of powder, granules or aqueous presscake in the presence of water (E) and of component (B), subsequently admixing, if desired, water, and, if desired (C) and/or (D), and, if desired, diluting the resultant aqueous pigment dispersion with water.

11. The use of a pigment preparation as claimed in one or more of claims 1 to 9 for pigmenting natural or synthetic materials.

12. The use as claimed in claim 11 for pigmenting and coloring aqueous coating materials, emulsion paints, and colored coatings (dispersion-based varnishes), water-thinnable paints, wallpaper inks, and printing inks.

13. The use as claimed in claim 11 for pigmenting natural and synthetic fiber materials, cellulose fibers, for the mass dyeing of paper and for coloring laminate, and also for producing printing inks, ink-jet inks, electrophotographic toners, powder coating materials, color filters, electronic inks and electronic paper, wood preservation systems, the spin coloring of viscose, sausage skins, seed, fertilizers, glass bottles, and also for the mass coloring of roof shingles, for coloring for renders, concrete, wood stains, colored pencil leads, fibertip pens, waxes, paraffins, graphics inks, ballpoint pen pastes, chalks, detergents and cleaning products, shoe polishes, latex products, abrasives, and for coloring plastics.

## Revendications

1. Préparation aqueuse de pigments, contenant
(A) 5 à 80 % en poids d'au moins un pigment organique et/ou inorganique,
(B) 0,1 à 30 % en poids d'au moins un oligo- ou polyester non ionique hydrosoluble ou hydrodispersible, qui peut être obtenu par polycondensation des composants acide dicarboxylique et glycol, comprenant
I) 10 à 50 % en poids d'un ou de plusieurs acides dicarboxyliques aromatiques, leurs esters ou anhydrides ;
II) 2 à 50 % en poids d'alkylène en C₂-C₈-diols,
III) 3 à 80 % en poids de poly(alkylène en C₁-C₄)glycols et/ou méthylpoly(alkylène en C₂-C₄)glycols,
IV) 0 à 10 % en poids d'un produit d'addition hydrosoluble de l'oxyde d'alkylène à des alcools en C₁-C₂₄, à des alkylphénols en C₆-C₁₈ ou à des alkylamines en C₈-C₂₄ et
V) 0 à 10 % en poids d'un ou de plusieurs polyols, respectivement par rapport au poids total de l'oligo- ou du polyester ;
(C) 0 à 30 % en poids d'autres agents dispersants et tensioactifs usuels pour la préparation de dispersions aqueuses de pigments,
(D) 0 à 50 % en poids d'autres additifs usuels pour la préparation de dispersions aqueuses de pigments, et
(E) 5 à 90 % en poids d'eau,
respectivement par rapport au poids total de la préparation de pigments.

2. Préparation de pigments selon la revendication 1, contenant
(A) 20 à 70 % en poids d'au moins un pigment organique et/ou inorganique,
(B) 1 à 15 % en poids d'au moins un oligo- ou polyester non ionique hydrosoluble ou hydrodispersible, qui peut être obtenu par polycondensation des composants acide dicarboxylique et glycol, comprenant
I) 15 à 30 % en poids d'un ou de plusieurs acides dicarboxyliques aromatiques, leurs esters ou anhydrides ;
II) 5 à 45 % en poids d'alkylène en C₂-C₈-diols,
III) 5 à 75 % en poids de poly(alkylène en C₁-C₄)glycols et/ou méthylpoly(alkylène en C₂-C₄)glycols,
IV) 0 à 10 % en poids d'un produit d'addition hydrosoluble de l'oxyde d'alkylène à des alcools en C₁-C₂₄, à des alkylphénols en C₆-C₁₈ ou à des alkylamines en C₈-C₂₄ et
V) 0 à 10 % en poids d'un ou de plusieurs polyols,
respectivement par rapport au poids total de l'oligo- ou du polyester ;
(C) 0,1 à 15 % en poids d'autres agents dispersants et tensioactifs usuels pour la préparation des dispersions aqueuses de pigments,
(D) 0,1 à 20 % en poids d'autres additifs usuels pour la préparation de dispersions aqueuses de pigments, et
(E) 5 à 78,8 % en poids d'eau, respectivement par rapport au poids total de la préparation de pigments.

3. Préparation de pigments selon une ou plusieurs des revendications 1 à 2, **caractérisée en ce que** le pigment organique (A) est au moins un pigment provenant du groupe constitué par les pigments monoazoïques, diazoïques, azoïques laqués, β-naphtol, naphtol AS, benzimidazolone, de condensation diazoïque, de complexes azo-métalliques, phtalocyanine, quinacridone, pérylène, périnone, thioindigo, anthanthrone, anthraquinone, flavanthrone, indanthrone, isoviolanthrone, pyranthrone, dioxazine, quinophtalone, isoindoline, isoindolinone ou dicétopyrrolopyrrol ou un noir acide à alcalin du groupe des noirs de fourneau ou noirs de fumée, ou une combinaison de ceux-ci.

4. Préparation de pigments selon une ou plusieurs des revendications 1 à 2, **caractérisée en ce que** le pigment inorganique (A) est au moins un pigment provenant du groupe constitué par les dioxydes de titane, les sulfures de zinc, les oxydes de zinc, les oxydes de fer, les oxydes de fer - manganèse, les oxydes de chrome, l'outremer, les oxydes de nickel ou chrome- antimoine - titane, les oxydes de cobalt, les oxydes mixtes de cobalt et d'aluminium, les pigments à phases mixtes de rutile, les sulfures de terres rares, les vanadates de bismuth ainsi que les pigments chargés, ou une combinaison de ceux-ci.

5. Préparation de pigments selon une ou plusieurs des revendications 1 à 4, **caractérisée en ce que** le pigment organique est combiné avec le noir et/ou le dioxyde de titane.

6. Préparation de pigments selon une ou plusieurs des revendications 1 à 5, **caractérisée en ce que** le composant (B) correspond à un ou plusieurs composés de formule (1) : 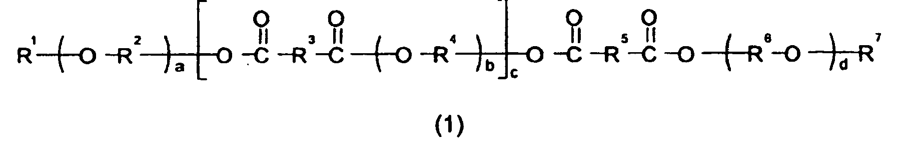 dans laquelle
R¹ et R⁷ représentent un radical alkyle en C₁-C₁₈ linéaire ou ramifié,
R², R⁴, R⁶ représentent, indépendamment, un alkylène (en C₁-C₈),
R³ et R⁵ représentent un arylène ou alkarylène,
a, b et d représentent un nombre compris entre 1 et 200, la somme de a, b et d étant au moins égale à 5,
c représente un nombre compris entre 1 et 20.

7. Préparation de pigments selon la revendication 6, **caractérisée en ce que**
R¹ et R⁷ représentent méthyle et/ou éthyle,
R², R⁴, R⁶ représentent éthylène, 1,2-propylène ou leurs mélanges,
R³ et R⁵ représentent 1,4-phénylène et 1,3-phénylène,
a, b et d représentent un nombre compris entre 1 et 100, la somme de a, b et d étant au moins égale à 5,
c représente un nombre compris entre 1 et 10.

8. Préparation de pigments selon une ou plusieurs des revendications 1 à 7, **caractérisée en ce que** le composant (B) correspond à un ou plusieurs composés de formule (2) : 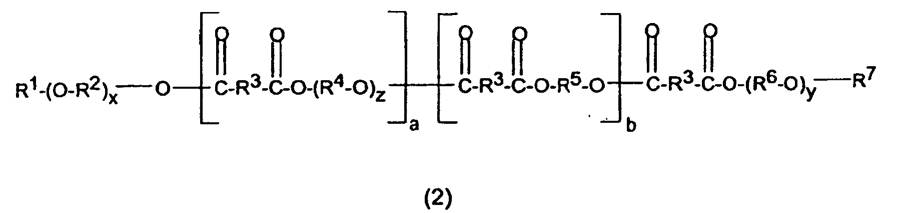 dans laquelle
R¹ et R⁷ représentent un radical alkyle en C₁-C₁₈ linéaire ou ramifié,
R² et R⁶ représentent éthylène,
R³ représente 1,4-phénylène ou 1,3-phénylène,
R⁴ représente éthylène,
R⁵ représente éthylène, 1,2-propylène ou une combinaison de ceux-ci,
x et y représentent, indépendamment, un nombre compris entre 1 et 500,
z représente un nombre compris entre 10 et 140,
a représente un nombre compris entre 1 et 12,
breprésente un nombre compris entre 7 et 40, la somme a + b étant au moins égale à 11.

9. Préparation de pigments selon la revendication 8, **caractérisée en ce que**
R¹ et R⁷ représentent un radical alkyle en C₁-C₄ linéaire ou ramifié,
R² et R⁶ représentent éthylène,
R³ représente 1,4-phénylène ou 1,3-phénylène,
R⁴ représente éthylène,
R⁵ représente éthylène, 1,2-propylène ou une combinaison de ceux-ci,
x et y représentent, indépendamment, un nombre compris entre 3 et 45,
z représente un nombre compris entre 18 et 70,
a représente un nombre compris entre 2 et 5,
breprésente un nombre compris entre 8 et 12, a + b représentant un nombre compris entre 12 et 17.

10. Procédé de production d'une préparation de pigments selon une ou plusieurs des revendications 1 à 9, **caractérisé en ce que** l'on disperse le composant (A) sous forme de poudre, de granulé ou de tourteau aqueux en présence d'eau (E) ainsi que du composant (B), que l'on ajoute ensuite le cas échéant de l'eau, ainsi que les (C) et/ou (D), et que l'on dilue le cas échéant avec de l'eau la dispersion aqueuse de pigments obtenue.

11. Utilisation d'une préparation de pigments selon une ou plusieurs des revendications 1 à 9 pour pigmenter des matières naturelles ou synthétiques.

12. Utilisation selon la revendication 11 pour pigmenter et colorer des peintures aqueuses, des laques et des dispersions (laques dispersions), des laques diluables à l'eau, des tapisseries et des encres d'impression.

13. Utilisation selon la revendication 11 pour pigmenter et colorer des matériaux fibreux naturels et synthétiques, des fibres en cellulose, pour la teinture de masses de papier et la teinture de stratifiés ainsi que pour la production d'encres d'impression, d'encres pour jet d'encre, de toners électrophotographiques, de laques pulvérulentes, de filtres de couleurs, d'encres électroniques et de «papier électronique », de systèmes xyloprotecteurs, de teinture au filage du viscose, de boyaux pour saucisses, de semences, d'engrais, de bouteilles en verre, ainsi que pour la teinture dans la masse de tuiles, pour la coloration des enduits, du béton, de mordants pour le bois, de mines pour crayons de couleur, de stylos à pointes fibreuses, de cires, de paraffines, de tubes de peinture pour le dessin, de pâtes pour les stylos à billes, de craies, de lessives et détergents, de cirages, de produits en latex, d'agents abrasifs ainsi que pour la teinture des plastiques.
